# EUROPEAN PATENT APPLICATION

(11) **EP 1 073 292 A2**
(43) Date of publication of application: **31.01.2001**
(21) Application number: 00115942.5
(22) Date of filing: 25.07.2000
(51) Int. Cl.: H04Q 7/22, H04M 1/725

(54) **Control device for displaying a short message in real time in a digital mobile station and method therefor**

(30) Priority: 28.07.1999 KR 9930936
(71) Applicant: SAMSUNG ELECTRONICS CO., LTD., Suwon-City, Kyungki-do (KR)
(72) Inventor: Son, Joo-ho, Nowon-gu, Seoul (KR)
(74) Representative: Grünecker, Kinkeldey, Stockmair & Schwanhäusser Anwaltssozietät

(57) **Abstract**

A control device for displaying in real time a received short message public notice or advertisement in a digital mobile station provided with a short message service (SMS) function, comprises a volatile memory for temporarily storing the short message public notice or advertisement to be accessed in real time, a display with a message screen capable of allocating an advertisement display part of the message screen for displaying the short message public notice stored in the volatile memory upon the request of the short message public notice, a detector for detecting a predefined identifier attached to the short message public notice to identify it, and a control unit for controlling the short message public notice to be stored into the volatile memory and displayed in real time on the advertisement display part.

## Description

The present invention relates to a control device for displaying a short message in a digital mobile station, and more particularly a control device for displaying in real time a short message specially designed by a telecommunication service provider in a digital mobile station, and a method therefore.

The conventional digital mobile station usually provides the user with the short message service (SMS) function through which short character messages may be exchanged other than the ordinary voice communications. The SMS function has been achieved by proper modification of the digital mobile communications system. Of course, the digital mobile station has been provided with a device for editing, inputting and sending the short message for that purpose. In such a digital mobile station, a received short message is stored into a non-volatile memory from which it may be retrieved by the user performing a specially designated key operation.

Although this key operation serves to provide the user with privacy by preventing the private short message from being automatically exposed to others, it also causes inconveniences for the user if a received short message is a public notice or advertisement. Namely, if the user must perform such key operation whenever the mobile communication service provider sends such additional information to the mobile station through the SMS, he should feel very annoyed. Further, the conventional SMS function is designed for the mobile station to store all the received short messages into a non-volatile memory like EEPROM or flash memory regardless of their kinds, e.g., the public notice or the user's private message, so that the user is often prevented from effectively using the memory.

It is, therefore, the object of the present invention to provide a control device and a corresponding method for displaying in real time a public notice or advertisement prepared by the communication service provider in a mobile station.

The foregoing object is solved by the subject-matters of the independent claims.

Preferred embodiments are the subject-matters of the dependent claims.

According to an aspect of the present invention, a control device for displaying in real time a received short message representing a public notice or advertisement in a digital mobile station provided with a short message service (SMS) function, comprises a volatile memory for temporarily storing the short message to be accessed in real time, a display with a message screen capable of allocating an advertisement display part of the message screen for displaying the short message stored in the volatile memory upon the request of the short message, a detector for detecting a predefined identifier attached to the short message to identify it, and a control unit for controlling the short message to be stored into the volatile memory and displayed in real time on the advertisement display part.

The present invention will now be described more specifically with reference to the drawings attached only by way of example.
Fig. 1 is a schematic plane view of a mobile station with a message screen displaying in real time a short message public notice according to the present invention;
Fig. 2 is a block diagram for illustrating the structure of a mobile station provided with a control device for displaying in real time a short message public notice according to the present invention;
Fig. 3 is a flow chart for illustrating a method for controlling a short message public notice to be displayed in real time on the message screen of the display of a digital mobile station according to the present invention; and
Fig. 4 is a schematic plane view of the message screen of the display of a mobile phone to compare the inventive message screen displaying in real time a short message public notice with the convention message screen.

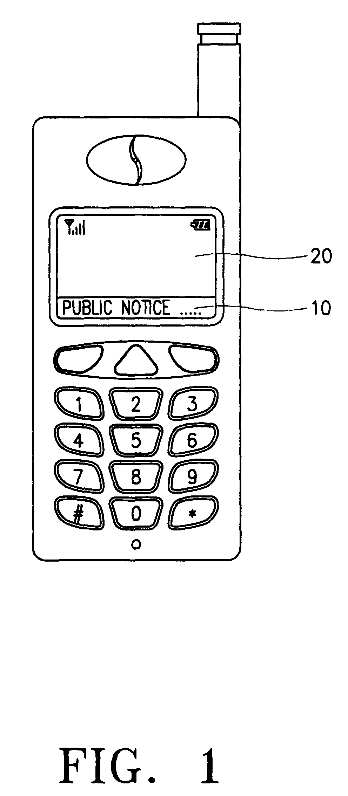

Referring to Fig. 1, when the communication service provider sends a short message representing a public notice or advertisement, the mobile phone of a subscriber allocates a section of the message screen 20 of the display at its bottom for an advertisement display part 10 to display in real time the short message public notice or advertisement according to the present invention.

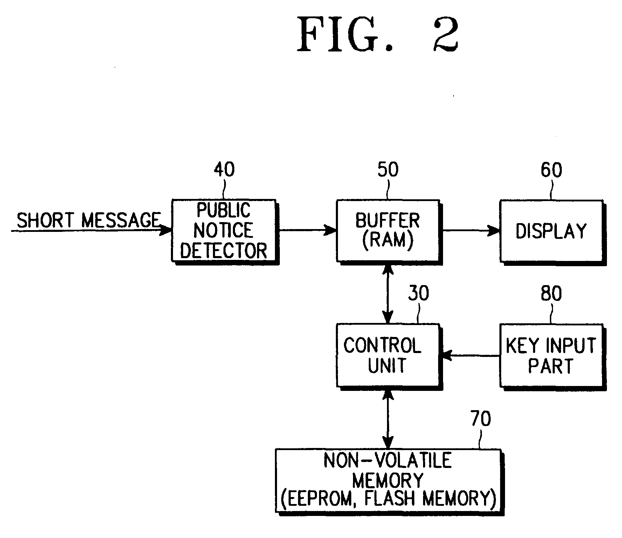

To this end, the mobile station is organized as shown in Fig. 2, where the elements not directly connected to describe the invention are omitted for convenience's sake. A control unit 30 generally consisting of a one-chip microprocessor controls a short message public notice to be displayed in real time together with the whole functions of the mobile phone. A key input part 80 includes a plurality of alphanumeric and functional keys operated by the user to edit, send, or receive a private short message, or manage the user's private data.

A non-volatile memory 70 such as flash memory or EEPROM serves to store the essential program for controlling the whole functions of the mobile station, initial service data, SMS program, and the data generated accompanying the operation of the mobile phone. It is also used to store the private short messages received or edited, but not the short message public notice temporarily stored into a non-volatile memory as a buffer 50. If it is desired to preserve the public notice, an additional interfacing procedure is required. The buffer 50 is generally an RAM to enable the received short message public notice to be accessed and displayed in real time.

A display 60 comprises an LCD, a section of which is allocated for the advertisement display part under the control of the control unit 30, as shown in Fig. 1. A public notice detector 40 analyzes a received short message to distinguish a short message public notice from an ordinary private short message. The distinction is accomplished by an identifier attached to the short message public notice, which is a distinction code agreed between the communications system and the mobile phone, delivered to the control unit 40.

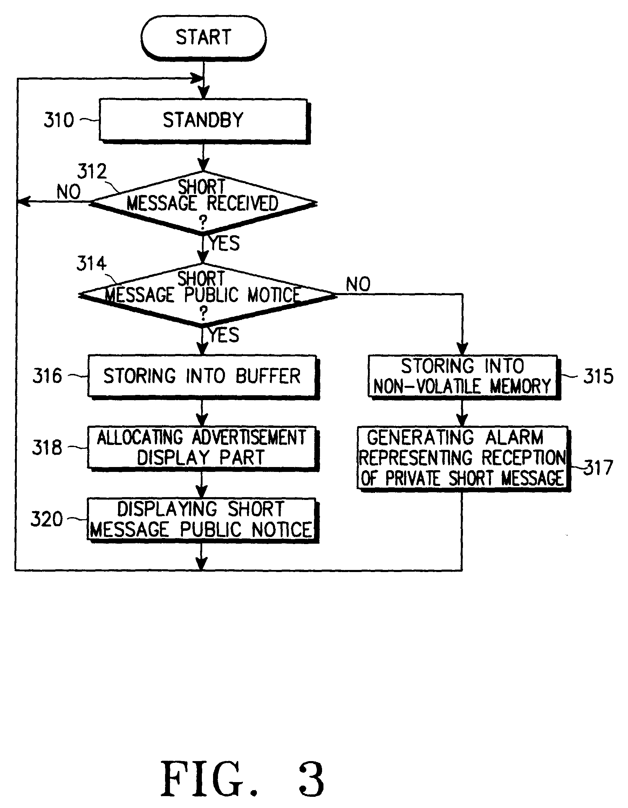

Describing the process of controlling the mobile phone to display in real time the short message public notice in connection with Fig. 3, if the mobile phone at standby state in step 310 detects the reception of a short message at decision 312, it determines at decision 314 whether the received short message is a public notice or no. To this end, the public notice detector 40 detects the predefined identifier to identify the public notice. If not detecting the identifier, the received short message is considered as an ordinary private short message, stored into the non-volatile memory 70 in step 315 as in the conventional SMS, and a signal such as alarm, vibration, etc. is generated to notify the user of the reception of the private short message in step 317.

Alternatively, if it determines at decision 314 by detecting the identifier that the short message public notice has been received, it stores the short message public notice into the buffer 50 of the volatile memory in step 316, and allocates the advertisement display part at one side of the message screen in step 318. Then, the short message public notice stored in the buffer is displayed on the advertisement display part in step 320. Thus, the short message public notice is directly transferred to the buffer, displayed in real time on the advertisement display part of the message screen, instead of being stored into the non-volatile memory as in the conventional SMS.

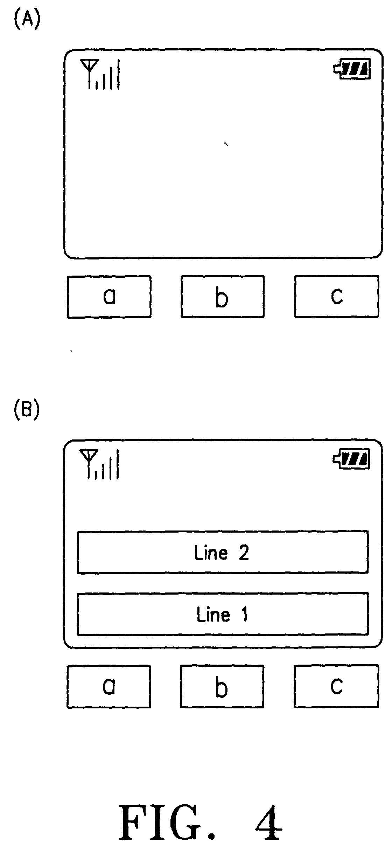

Referring to Fig. 4, state 'A' represents the state of displaying the ordinary private short message on the message screen by operating the short message retrieving keys 'a', 'b' and 'c', while state 'B' represents the allocation of the advertisement display part in the form of 'Line 1' and 'Line 2' without operating the keys 'a', 'b' and 'c' upon receiving the short message public notice. Namely, the received public notice is displayed in real time on the advertisement display part of 'Line 1' and 'Line 2'.

Thus, in addition to the conventional SMS, the invention provides means for displaying in real time the public notice on the message screen of the mobile phone without any additional key operation of the subscriber, so that the communication service provider may freely sends the public notice or advertisement to the subscriber.

## Claims

1. A control device for displaying in real time a received short message representing a public notice or advertisement in a digital mobile station provided with a SMS function, comprising:
a volatile memory for temporarily storing said short message to be accessed in real time;
a display with a message screen capable of allocating an advertisement display part of said message screen for displaying said short message stored in said volatile memory upon the request of said short message;
a detector for detecting a predefined identifier attached to said short message to identify it as a public notice or an advertisement; and
a control unit for controlling said short message to be stored into said volatile memory and displayed in real time on said advertisement display part.

2. The control device as defined in Claim 1, wherein said non-volatile memory consists of a random access memory (RAM).

3. The control device as defined in Claim 1 or 2, wherein said predefined identifier attached to said short message is an identification code.

4. The control device as defined in one of the Claims 1 to 3, wherein said advertisement display part consists of at least one region predefined in one side of said message screen.

5. The control device as defined in one of the Claims 1 to 4, wherein, if said predefined identifier is not detected, said control unit controls the received short message to be stored in a non-volatile memory, and generation of an alarm.

6. A method for displaying in real time a received short message representing a public notice or advertisement in a digital mobile station provided with a SMS function, comprising the steps of:
detecting a predefined identifier attached to said short message to identify it as a public notice or an advertisement;
storing said short message into volatile memory to display it in real time;
allocating a predetermined region of the message screen of a display for an advertisement display part upon detecting said predefined identifier; and
displaying in real time said short message on said advertisement display part.

7. The method as defined in Claim 6, wherein said predefined identifier attached to said short message is an identification code.

8. The method as defined in Claim 6 or 7, wherein said advertisement display part consists of at least one region predefined in one side of said message screen.

9. The method as defined in one of the Claims 6 to 8, further including the steps of storing the received short message into a non-volatile memory upon not detecting said predefined identifier, and generating an alarm.

10. A digital mobile station comprising a control device according to one of the claims 1 to 5.
